# EUROPEAN PATENT SPECIFICATION

(11) **EP 2 607 759 B1**
(45) Date of publication and mention of the grant of the patent: **17.06.2015**
(21) Application number: 12197664.1
(22) Date of filing: 18.12.2012
(51) Int. Cl.: F16K 24/04, F24D 19/08

(54) **Float Type Air Venting Valve**
Entlüftungsventil mit Schwimmer
Soupape de ventilation à flotteur

(30) Priority: 22.12.2011 IT MI20112363
(43) Date of publication of application: 26.06.2013
(73) Proprietor: Far Rubinetterie S.P.A., 28024 Gozzano (NO) (IT)
(72) Inventor: Allesina, Guerrino, 28024 Gozzano (IT)
(74) Representative: Candito, Rocco

(56) References cited:
- EP-A1- 1 473 495
- EP-A2- 1 488 947
- US-A1- 2007 079 872

## Description

### BACKGROUND OF THE INVENTION

The present invention relates to a float air vent valve, suitable to be applied to heating circuits to allow the separation and evacuation of the air generated therein.

Air vent valves are known, comprising a valve body defining a cavity inside which a vertically mobile float is housed, the valve body being configured to be secured via a threaded coupling directly on a length of a heating circuit pipeline, to which it is connected in a stationary position. Sometimes, the valve body is fixedly screwed onto a fitting body, containing a filtering cartridge, the fitting body being in turn screwed to the above-mentioned pipeline length in a stationary position. Superiorly to the valve body, a closure cover is secured via a threaded coupling, housing a mobile plug operatively connected to the float, and suitable for allowing the air evacuation. Air can be evacuated through a release opening obtained in the closure cover, to which a closure cap is coupled. In a type of air vent valve, the release opening faces upwards, i.e., it is oriented parallel to a longitudinal axis along which the float is mobile, while, in another type, it faces transversely relative to the above-mentioned longitudinal axis.

The closure cover, the valve body, and the optional fitting body, once assembled for operation, are rigidly connected together so as to define a single piece, which, in turn, is rigidly secured to the heating circuit pipeline. Therefore, in operation, the release opening is oriented according to a predetermined direction that cannot be freely selected. The so-configured known air vent valve may involve limitations or assembling difficulties, and operative problems; for example, the presence of the air vent valve near apparatuses or certain problematic areas, may lead to problems when the release opening is oriented exactly towards the latter. As a result, an air evacuation operation, which air is often contaminated with dirt and sediments coming from the hydraulic circuit, from the release opening, can undesirably cause damages in the areas located on the release opening trajectory.

Also known are venting valves as disclosed by documents US2007/0079872 A1, EP1488947 A2 and EP1473495 A1.

An object of the present invention is to improve the known air vent valves.

Another object is to provide an air vent valve that is more versatile and capable of obviating the above-mentioned drawbacks.

What has been set forth above is made possible by a float air vent valve as defined in claim 1.

Owing to the air vent valve according to the invention, all the intrinsic drawbacks of the above-described known valves are obviated.

Features and advantages of the present invention will be apparent from the following description and from the appended drawings, which illustrate an exemplary, non-limiting embodiment thereof, in which:
Figs. 1 and 2 are perspective views of a de-aerator device comprising a float air vent valve according to the invention in two possible operative configurations, in which an air release opening of the above-mentioned valve is oriented according to two different directions, respectively;
Fig. 3 is a perspective view in a longitudinal section of the de-aerator device in an operative step in which the release opening is closed by a plug included in the air vent valve;
Fig. 4 is a view similar to that of Fig. 3, but in a further operative step in which the plug, actuated by the float arranged in a lowered position, allows for the air venting outwardly through the release opening;
Fig. 5 is a longitudinal section of the de-aerator device comprising the float air vent valve according to the invention;
Fig. 6 is an enlarged detail of Fig. 5;

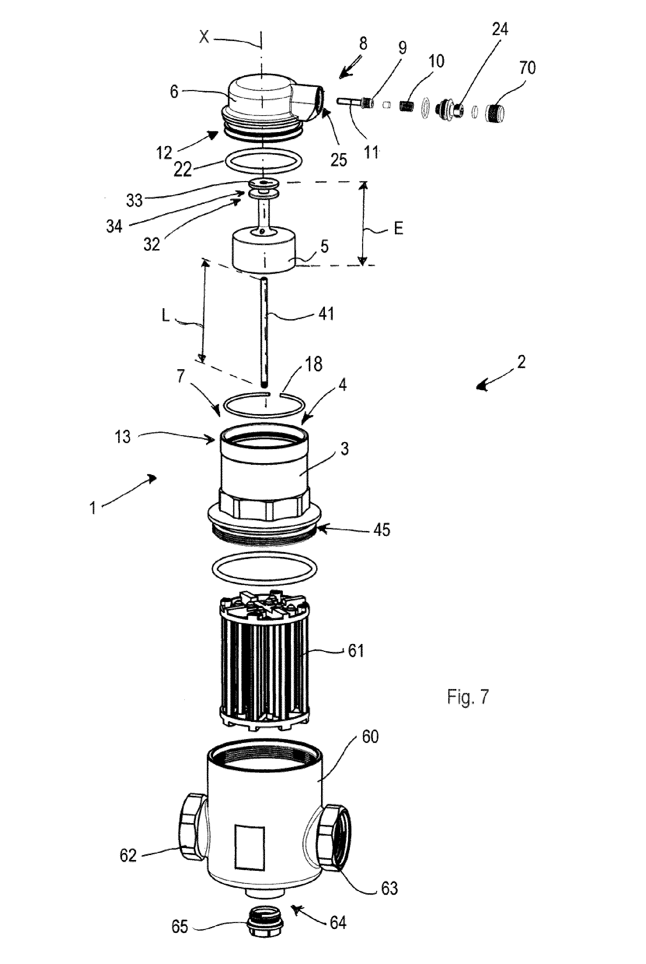

Fig. 7 is an exploded view of the de-aerator device including the float air vent valve according to the invention.

With reference to the appended Figures, a float air vent valve 1 is shown, which is included in a de-aerator device 2 suitable for being applied in heating circuits in order to separate the air generated therein and to evacuate it to the outside. Particularly, the de-aerator device 2 is intended to be mounted on a pipeline length of the heating circuit.

The float air vent valve 1 comprises a valve body 3 internally defining a cavity 4 that extends along a longitudinal axis X. The cavity 4 is shaped so as to slidably house a float 5 that is mobile along the longitudinal axis X.

The air vent valve 1 comprises a cover element 6 configured to close an upper end 7 of the valve body 3. The cover element 6 comprises a top wall 23, and it is provided with an air release opening 8 that extends transversely to the longitudinal axis X, through which the air is evacuated from the de-aerator device 2. In other terms, the air release opening 8 extends along a release direction S that is arranged transversally, in particular substantially perpendicular, with respect to the longitudinal axis X. The release opening is defined by a duct element 24 that is coupleable by screwing in a dedicated seat 25 obtained in the cover element 6.

A plug 9 is included in the cover element 6, the function of which is to enable, or disable, the air venting through the air release opening 8. The plug 9 is operatively connected to the float 5.

The front-type plug 9 is supported, via a coil spring 10, to move between a lifted closure position and a lowered opening position, which respectively prevent and enable the air discharge through the air release opening 8.

The plug 9 comprises a stem 11 extending towards an inner zone of the cover element 6 to engage with the float 5.

A closure cap 70 is associated to the release opening 8, which cap, in a closure position, prevent the air from flowing outwardly through the release opening 8 even if the plug 9 is in the opening position.

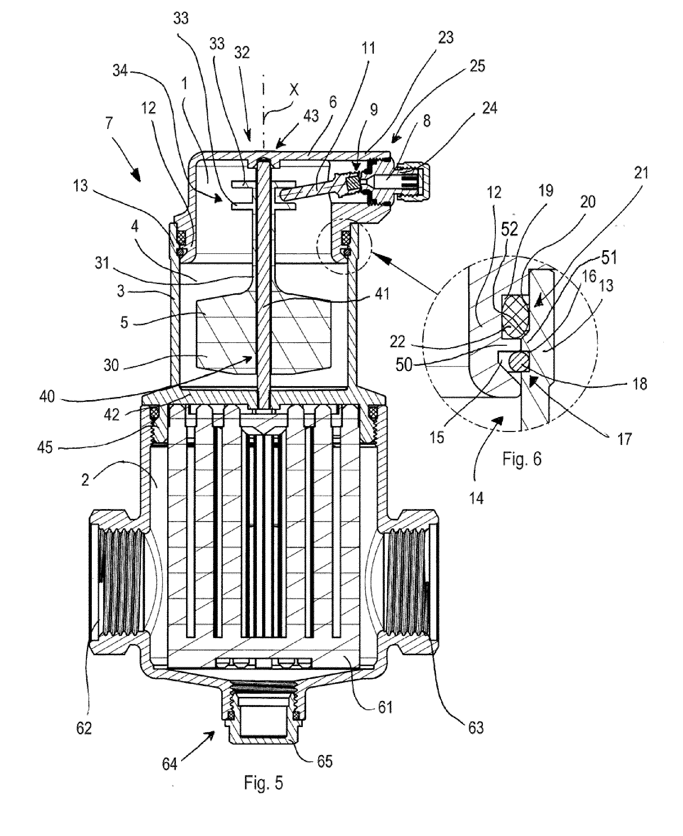

The cover element 6 and the valve body 3 comprise a first connecting portion 12 and a second connecting portion 13, respectively, best shown in Fig. 6, in particular in the shape of a circle, which together define a swivel joint 14.

The swivel joint 14 is configured to prevent a relative movement parallel to the longitudinal axis X between the cover element 6 and the valve body 3, and to allow an angular adjustment of the cover element 6 around the longitudinal axis X and relative to the valve body 3 for orienting the air release opening 8 in a desired manner.

The first connecting portion 12 of the cover element 6 is coaxially arranged within the second connecting portion 13, and they define together a swivel sealing coupling, which allows at the same time a relative rotation between the cover element 6 and the valve body 3 and which prevent a discharge of fluids in the connecting zone between the cover element 6 and the valve body 3.

With reference to Fig. 6, a circumferential holding half-seat 15 is obtained on the first connecting portion 12, cooperating with a further circumferential holding half-seat 16 - obtained on the second connecting portion 13 - for defining an annular holding seat 17.

The circumferential holding half-seat 15 is configured as a circular groove obtained across the thickness of the first connecting portion 12. Similarly, the further circumferential holding half-seat 16 is configured as a further circular groove obtained across the thickness of the second connecting portion 13. The holding half-seat 15 and the further holding half-seat 16 mutually face to define together the annular holding seat 17.

The holding seat 17 is shaped to house a "Seger" ring 18, or another equivalent holding means, suitable for holding and keeping the cover element 6 coupled to the valve body 3, thus preventing axial movements thereof with respect to the valve body 3, i.e., movements along the longitudinal axis X.

An annular recess 19 or sealing half-seat is circumferentially obtained on the first connecting portion 12, cooperating with a sealing surface 20, circumferentially provided for within the second connecting portion 13, for defining an annular sealing seat 21 that is shaped so as to house a sealing "O-ring" 22 or another equivalent sealing means.

The sealing seat 21 and the holding seat 17 extend, in a mutually parallel manner, around the longitudinal axis X. The sealing seat 21 and the holding seat 17 are separated one from the other by an annular projection 50, obtained on the first connecting portion 12, and by a circular projection with a trapezoidal cross-section 51, or with a tapered cross-section, obtained on the second connecting portion 12 and suitable to abut against the annular projection 50. The circular projection with a trapezoidal cross-section 51 comprises a conical, or sloped, surface 52, convergent inwardly of the valve body 3, i.e., convergent away from the upper edge of the second connecting portion 13. The conical surface 52, during the assembling of the cover element 6 on the valve body 3, acts as an insertion and coupling promoting element for the cover element 6; in other terms, the conical surface, during the application of the cover element 6 on the valve body 3, promotes the insertion of the holding means, such as the "Seger" ring 18, in the holding seat 17. In fact, when the first connecting portion 12 is inserted into the second connecting portion 13, the "Seger" ring 18 is progressively radially compressed by the interaction with the conical surface 52, on which it is made to slide. Once the circular projection with a trapezoidal cross-section 51 has been passed, the "Seger" ring 18 is free to expand in order to go back to its normal configuration, thus taking also part of the further holding half-seat 16, besides of the holding half-seat 15.

Therefore, the conical surface 52 acts as an element promoting the shrinkage or compression of the "Seger" ring or other equivalent means, and promoting the subsequent safe insertion of the latter within the holding seat 17.

In a possible embodiment, not shown, the mutual position of the first connecting portion 12 and of the second connecting portion 13 are exchanged, i.e., the second connecting portion 13 is inserted in the first connecting portion. In such an embodiment, the conical, or sloped, surface 52, is convergent toward the top of the cover element 6, i.e., it diverges away from the upper edge of the second connecting portion 13.

Also in this case, the conical surface 52 acts, as disclosed above, as an insertion and coupling promoting element, but rather than causing a temporary shrinkage or radial compression of the "Seger" ring 18 during assembling, it temporary causes an enlargement or radial expansion, thus subsequently allowing, once the circular projection with a trapezoidal cross-section 51 has been passed, returning to the normal rest configuration within the holding seat 17.

Owing to the above-disclosed configuration of the first connecting portion 12 and of the second connecting portion 13, with particular reference to the special shape of the circular projection with a trapezoidal cross-section, or with a tapered cross-section, which is provided with a conical, or sloped, surface 52, and to the annular projection 50, a very efficient sealing coupling is obtained, that can be oriented during operation, and which is further such as to considerably promote the assembling and mutual coupling operations of the cover element 6 and the valve body 3. In particular, the "Seger" ring 18 is always coupled to the cover element 6, thus facilitating the assembling/disassembling operations compared to the known devices, in which there is also the risk that some securing elements, during an operator's intervention, separate from the valve and get lost.

Owing to the so-shaped air vent valve 1, in particular, owing to the swivel joint 14, in contrast with the known devices, it is possible to orient the release direction S very easily and at any time, without any need to stop the heating plant/ circuit and without carrying out disassembling operations of the de-aerator device 2. In other terms, an angular adjustment of the cover element 6 is possible also during the operation of the heating circuit, therefore without any need to stop the latter.

The possibility to orient the air release opening 8 in a desired manner and at any time, even during the operation of the heating circuit, allows dealing with limitations or assembling difficulties due to, for example, reduced assembling spaces, or to the presence of apparatuses nearby, for example, plant pumps or control panels or, generally, particularly delicate areas, which could be damaged if they were hit by the air release.

Furthermore, during a maintenance operation, the possibility to separate the cover element 6 from the valve body 3 allows a better access to the inner areas of the de-aerator device, and to facilitate cleaning and/or replacement operations of components, such as the plug 9.

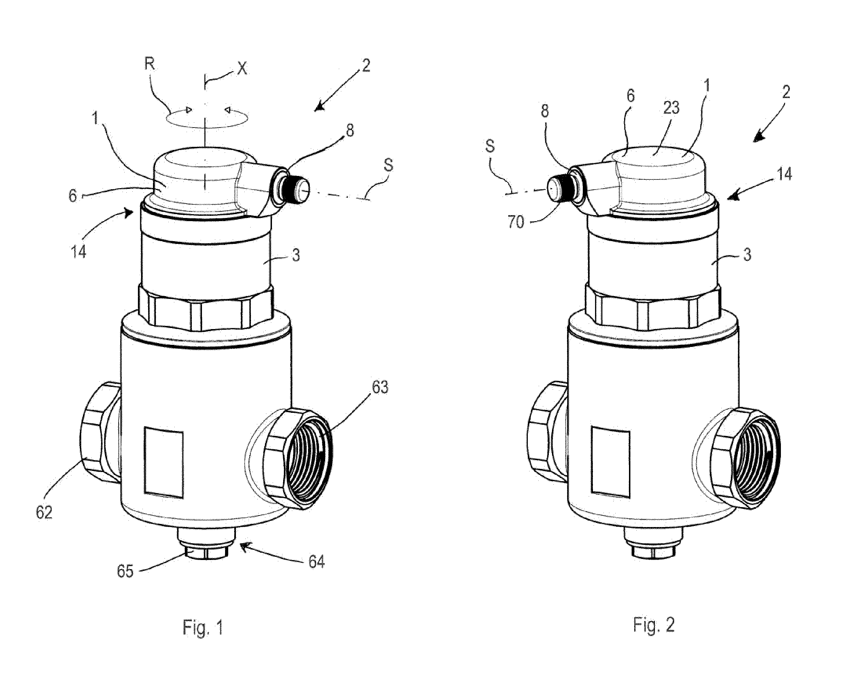

The cover element 6 can be rotated, as the arrow R shows, from a determined angular position to another angular position as seen in Figs. 1 and 2, at any time, without any disassembling operations, and without the need to stop the heating circuit operation.

With reference to Fig. 5, the float 5 comprises a floating body 30 from which an elongated portion 31 projects towards the cover element 6, which elongated portion 31 comprises, at one upper end 32, a pair of flange portions 33, in particular having a disc shape. The flange portions 33 extend transversely with respect to the longitudinal axis X, are mutually parallel and spaced apart, and define an annular engagement zone 34 suitable for movably housing an end portion of the plug stem 11.

The float 5 with the so-configured engagement zone 34 allows a relative rotation of the stem 11 with respect to the elongated portion 31 both on a plane passing through the longitudinal axis X, and on a plane that is orthogonal to the latter.

The presence of two flange portions 33, between which the stem 11 is sandwiched, makes the actuation of the stem 11 and return thereof to a rest position more efficient and reliable. Furthermore, the possibility of a relative rotation of the stem on the above-mentioned two planes with respect to the elongated portion 31 prevents any undesired sticking or blocking of the plug 9 and/or the float 5.

Along the entire float 5, i.e., in both the floating body 30 and the elongated portion 31, a through opening 40 is obtained, through which the float 5 is axially and slidably coupled to a stationary guide pin element 41. The guide pin 41 extends from a bottom wall 42 of the valve body 3, which can be passed through by a fluid, to a top wall 23 of the cover element 6, and it has a length L greater than a longitudinal extension E of the float 5.

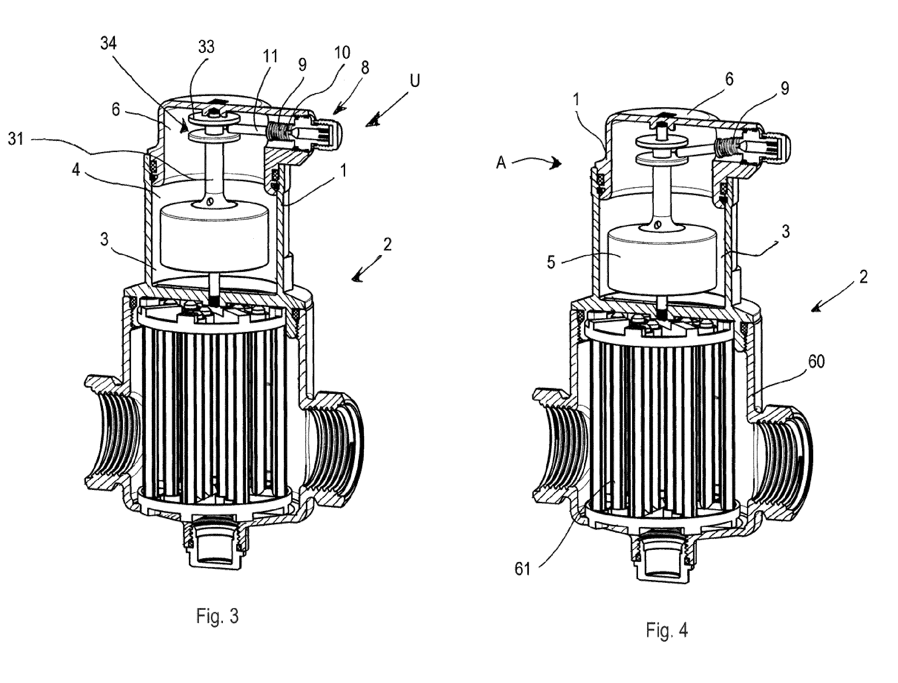

The so-configured stationary guide pin 41 has the function of precisely guiding and keeping the float 5 in a proper position during operation, during which the float 5 can pass from a lifted position U, shown in Fig. 3, to a lowered position A shown in Fig. 4.

In particular, a lower end of the guide pin element 41 is screwed into the bottom wall 42, and an upper end of the guide pin element 41 is housed in a recess portion 43 obtained in the top wall 23.

The so-configured guide pin element 41 prevents undesired misalignments or inclinations of the float 5 within the valve body 3.

The valve body 3 is inferiorly provided with a threaded portion 45 through which it can be screwed to a containing and fitting body 60 with which the de-aerator device 2 is provided.

The containing and fitting body 60 is suitable for being connected to a pipeline of the heating circuit, and it is shaped so as to internally house a filtration and separation element 61 suitable for filtering the water circulating in the circuit and for separating the air that is generated inside the latter.

The containing and fitting body 60 is provided with a water inlet 62 and outlet 63, which can be connected to the above-mentioned pipeline.

The containing and fitting body 60 further comprises a further outlet 64, to which a removable stopper 65 is associated, to allow for the periodic evacuation of any sediments and dirt coming from the circuit, which progressively settle on the de-aerator device 2 bottom.

During a standard operation, the water of the heating circuit enters the de-aerator device 2 through the inlet 62, interacts with the filtration and separation element 61 that provides for holding dirt and sediments and for promoting the separation of air bubbles. Subsequently, the water leaves the de-aerator device 2 flowing through the outlet 63. As the air bubbles accumulate in the de-aerator device 2 and rise towards the valve body 3, the float 5 progressively lowers, thus dragging the stem 11 downwards. Thus, the plug 9 is at least partially separated from the release opening 8, which is now free to release the accumulated air. If the cap 70 is open, then the air is evacuated. Progressively, the water level rises to bring the float 5 back to the lifted position U, where the plug 9 is coupled again to the release opening 8, thus locking it.

Variants and/or additions to what has been disclosed above and illustrated in the appended drawings are possible. A number of elements can be replaced by further technically equivalent elements, without for this departing from the scope of the invention.

It is possible to set and size the device in a desired manner as a function of the particular application for which it is intended. Furthermore, the materials used for manufacturing the air vent valve 1 can be selected according to the needs, provided that they are suitable for the specific use for which they are intended.

## Claims

1. Float air vent valve for a de-aerator device for a heating circuit, comprising:
- a valve body (3) defining a cavity (4) that extends along a longitudinal axis (X);
- a float (5) housed in said cavity (4) and slidable along said longitudinal axis (X);
- a cover element (6) configured to close an end (7) of said valve body (3) and provided with an air release opening (8) that extends transversely with respect to said longitudinal axis (X), said cover element (6) including a plug (9) for said air release opening (8) operatively connected to said float (5),
said cover element (6) and said valve body (3) comprising a first connecting portion (12) and a second connecting portion (13), respectively, which together define a swivel joint (14) configured to prevent a relative axial movement of said cover element (6) and said valve- body (3) parallel to said longitudinal axis (X) and so as to allow, even during the operation of said heating circuit, an angular adjustment of said cover element (6) around said longitudinal axis (X) and with respect to said valve body (3) for orienting said air release opening (8) in a desired manner
said first connecting portion (12) and said second connecting portion (13) defining together an annular sealing seat (21) for sealing means (22).
**characterized in that** said first connecting portion (12) and
said second connecting portion (13) further define together an annular holding seat (17) for housing holding means (18) suitable to prevent said relative axial movement and to allow said angular adjustment during the operation of the valve.

2. Float air vent valve according to claim 1, wherein said first connecting portion (12) and said second connecting portion (13) are shaped so as to be mutually coaxial and to define a seal swivel coupling.

3. Float air vent valve according to claim 1 or 2, wherein a holding seat portion (15) and a further holding seat portion (16) are circumferentially obtained on said first connecting portion (12) and on said second connecting portion (13) respectively, said holding seat portion (15) and said further holding seat portion (16) defining together said annular holding seat (17) shaped to house a "Seger"-type ring (18) suitable for preventing a relative axial movement between said cover element (6) and said valve body (3).

4. Float air vent valve according to any one of claims 1 to 3, wherein a sealing seat portion (19) and a further sealing seat portion (20) are circumferentially obtained on said first connecting portion (12) and on said second connecting portion (13), respectively, said sealing seat portion (19) and said further sealing seat portion (20) defining together said annular sealing seat (21) shaped to house sealing means (22), such as an "O-ring" element.

5. Float air vent valve according to any one of claims 1 to 4, wherein an annular projection (50) and a circular projection with a trapezoidal cross-section (51), or with a tapered cross-section, are obtained on said first connecting portion (12) and on said second connecting portion (13), respectively, which are so shaped as to rotate with a relative rotation around said longitudinal axis (X), said circular projection with a trapezoidal cross-section (51), or with a tapered cross-section, being provided with a conical, or sloped, surface (52), so shaped as to facilitate the insertion of said holding means (18) in said annular holding seat (17).

6. Float air vent valve according to any one of the claims 1 to 5, wherein said first connecting portion (12) is configured to be coaxially placed within said second connecting portion (13).

7. Float air vent valve according to any one of the preceding claims, wherein said float (5) includes a floating body (30) from which an elongated portion (31) projects towards said cover element (6), said elongated portion (31) comprising, at one end (32), a pair of enlarged parts (33), configured as flange elements protruding from said elongated portion (31) transversely with respect to said longitudinal axis (X), and that are shaped so as to define an annular engagement zone (34) suitable for movably housing part of a stem (11) of said plug (9).

8. Float air vent valve according to claim 7, wherein said engagement zone (34) is shaped to allow a relative rotation of said stem (11) with respect to said elongated portion (31) both on a plane passing through said longitudinal axis (X), and on a plane that is orthogonal to said longitudinal axis (X).

9. Float air vent valve according to claim 7 or 8, wherein said enlarged parts comprise disc-shaped portions (33) that are mutually parallel and separated by a certain distance from one another.

10. Float air vent valve according to any one of the claims 7 to 9, wherein a through opening (40) is obtained along said floating body (30) and along said elongated portion (31), through which said float (5) is axially and slidably coupled to a stationary guide pin element (41) that extends from a bottom wall (42) of said valve body (3) to a top wall (23) of said cover element (6) so as to have a length (L) greater than a longitudinal extension (E) of said float (30).

11. Float air vent valve according to claim 10, wherein an end of said guide pin element (41) is screwed onto said bottom wall (42), and a further end of said guide pin element (41) is housed in a recess portion (43) of said top wall (23).

12. Float air vent valve according to any one of the preceding claims, wherein said valve body (3) is connectable, via a threaded coupling (45), to a containing and fitting body (60) suitable for being connected to a heating circuit pipeline and shaped to internally house a filtration and separation element (61) suitable for filtering the water circulating inside said circuit and for separating the air that is generated inside the latter.

13. De-aerator device comprising a float air vent valve (1) according to claim 12 wherein said containing and fitting body (60) houses said filtration and separation element (61), said containing and fitting body (60) being provided with a water inlet (62) and outlet (63), which can be connected to said pipeline, and with an additional outlet (64) to allow for the periodic evacuation of any sediment and dirt coming from said circuit.

## Patentansprüche

1. Schwimmerentlüfterventil für eine Entlüfteranlage für einen Heizkreis, umfassend:
- einen Ventilkörper (3), welcher eine Ausnehmung (4) definiert, die sich entlang einer Längsachse (X) erstreckt;
- einen Schwimmer (5), welcher in der Ausnehmung (4) aufgenommen ist und verschiebbar entlang der Längsachse (X) ist;
- ein Abdeckelement (6), welches konfiguriert ist, um ein Ende (7) des Ventilkörpers (3) abzuschließen und mit einer Entlüftungsöffnung (8) vorgesehen ist, welche sich quer in Bezug auf die Längsachse (X) erstreckt, wobei das Abdeckelement (6) einen Stopfen (9) für die Entlüftungsöffnung (8) umfasst, der im Betrieb mit dem Schwimmer (5) verbunden ist,
wobei das Abdeckelement (6) und der Ventilkörper (3) einen ersten Verbindungsabschnitt (12) beziehungsweise einen zweiten Verbindungsabschnitt (13) umfassen, welche gemeinsam ein Drehgelenk (14) definieren, das konfiguriert ist, um eine relative axiale Bewegung des Abdeckelements (6) und des Ventilkörpers (3) parallel zur Längsachse (X) zu verhindern und dadurch auch während des Betriebs des Heizkreises eine Winkelanpassung des Abdeckelements (6) um die Längsachse (X) und in Bezug auf den Ventilkörper (3) zum Ausrichten der Entlüftungsöffnung (8) in einer angestrebten Weise zu gestatten,
wobei der erste Verbindungsabschnitt (12) und der zweite Verbindungsabschnitt (13) gemeinsam einen ringförmigen Dichtungssitz (21) für ein Dichtmittel (22) definieren,
**dadurch gekennzeichnet, dass** der erste Verbindungsabschnitt (12) und der zweite Verbindungsabschnitt (13) des Weiteren gemeinsam einen ringförmigen Haltesitz (17) zum Aufnehmen des Haltemittels (18) definieren, welches geeignet ist, die relative axiale Bewegung zu verhindern und die Winkelanpassung während des Betriebs des Ventils zu gestatten.

2. Schwimmerentlüfterventil nach Anspruch 1, wobei der erste Verbindungsabschnitt (12) und der zweite Verbindungsabschnitt (13) so ausgeformt sind, um gemeinsam koaxial zu sein und eine Dichtungsdrehkupplung zu definieren.

3. Schwimmerentlüfterventil nach Anspruch 1 oder 2, wobei ein Haltesitzabschnitt (15) und ein weiterer Haltesitzabschnitt (16) auf dem ersten Verbindungsabschnitt (12) beziehungsweise auf dem zweiten Verbindungsabschnitt (13) entlang des Umfangs erzielt wird, wobei der Haltesitzabschnitt (15) und der weitere Haltesitzabschnitt (16) gemeinsam den ringförmigen Haltesitz (17) definieren, welcher ausgebildet ist, um einen "Seeger"-Ring (18) aufzunehmen, welcher geeignet ist, eine relative axiale Bewegung zwischen dem Abdeckelement (6) und dem Ventilkörper (3) zu verhindern.

4. Schwimmerentlüfterventil nach einem beliebigen der Ansprüche 1 bis 3, wobei ein Dichtsitzabschnitt (19) und ein weiterer Dichtsitzabschnitt (20) entlang des Umfangs auf dem ersten Verbindungsabschnitt (12) beziehungsweise auf dem zweiten Verbindungsabschnitt (13) erzielt werden, wobei der Dichtsitzabschnitt (19) und der weitere Dichtsitzabschnitt (20) gemeinsam den ringförmigen Dichtungssitzabschnitt (21) definieren, welcher ausgebildet ist, um das Dichtmittel (22) wie ein "0-Ring"-Element aufzunehmen.

5. Schwimmerentlüfterventil nach einem beliebigen der Ansprüche 1 bis 4, wobei ein ringförmiger Vorsprung (50) und ein kreisförmiger Vorsprung mit einem trapezförmigen Querschnitt (51) oder mit einem sich verjüngenden Querschnitt auf dem ersten Verbindungsabschnitt (12) beziehungsweise auf dem zweiten Verbindungsabschnitt (13) erzielt werden, welche so ausgebildet sind, um sich mit einer relativen Drehung um die Längsachse (X) zu drehen, wobei der kreisförmige Vorsprung mit einem trapezförmigen Querschnitt (51) oder mit einem sich verjüngenden Querschnitt mit einer konischen oder schrägen Fläche (52) vorgesehen ist, so geformt, um das Einschieben des Haltemittels (18) in den ringförmigen Haltesitz (17) zu ermöglichen.

6. Schwimmerentlüfterventil nach einem beliebigen der Ansprüche 1 bis 5, wobei der erste Verbindungsabschnitt (12) konfiguriert ist, um koaxial innerhalb des zweiten Verbindungsabschnitts (13) angeordnet zu sein.

7. Schwimmerentlüfterventil nach einem beliebigen der vorangehenden Ansprüche, wobei der Schwimmer (5) einen Schwimmerkörper (30) umfasst, von welchem ein länglicher Abschnitt (31) in Richtung des Abdeckelements (6) vorragt, wobei der längliche Abschnitt (31) an einem Ende (32) ein Paar vergrößerter Teile (33) umfasst, welche als Flanschelemente konfiguriert sind, die vom länglichen Abschnitt (31) quer in Bezug auf die Längsachse (X) vorragen und die ausgeformt sind, um eine ringförmige Eingriffszone (34) zu definieren, welche geeignet ist, den Aufnahmeteil eines Schafts (11) des Stopfens (9) beweglich aufzunehmen.

8. Schwimmerentlüfterventil nach Anspruch 7, wobei die Eingriffszone (34) ausgeformt ist, um eine relative Drehung des Schafts (11) in Bezug auf den länglichen Abschnitt (31) sowohl auf einer Ebene, welche durch die Längsachse (X) geht, als auch auf einer Ebene, welche orthogonal zur Längsachse (X) steht zu gestatten.

9. Schwimmerentlüfterventil nach Anspruch 7 oder 8, wobei die vergrößerten Teile scheibenförmige Abschnitte (33) umfassen, welche zueinander parallel sind und durch einen bestimmten Abstand voneinander getrennt sind.

10. Schwimmerentlüfterventil nach einem beliebigen der Ansprüche 7 bis 9, wobei eine Durchgangsöffnung (40) entlang des Schwimmkörpers (30) und entlang des länglichen Abschnitts (31) erzielt wird, durch welche der Schwimmer (5) axial und gleitfähig mit einem ortsfesten Führungsstiftelement (41) gekoppelt ist, welches sich von einer Bodenwand (42) des Ventilkörpers (3) zu einer oberen Wand (23) des Abdeckelements (6) erstreckt, um so eine Länge (L) aufzuweisen, welche größer ist als eine Längserstreckung (E) des Schwimmerkörpers (30).

11. Schwimmerentlüfterventil nach Anspruch 10, wobei ein Ende des Führungsstiftelements (41) auf die Bodenwand (42) geschraubt ist und ein weiteres Ende des Führungsstiftelements (41) in einem Vertiefungsabschnitt (43) der oberen Wand (23) aufgenommen ist.

12. Schwimmerentlüfterventil nach einem beliebigen der vorangehenden Ansprüche, wobei der Ventilkörper (3) über eine Gewindekupplung (45) mit einem Aufnahme- und Passkörper (60) verbindbar ist, welcher geeignet ist, um mit einer Heizkreisleitung verbindbar zu sein, und welcher so gestaltet ist, um innen ein Filtrierungs- und Abscheideelement (61) aufzunehmen, das geeignet ist, das Wasser, welches in dem Kreis zirkuliert, zu filtern und die Luft, welche in Letzterem erzeugt wird, abzuscheiden.

13. Entlüfteranlage, umfassend ein Schwimmerentlüfterventil (1) nach Anspruch 12, wobei der Aufnahme- und Passkörper (60) das Filtrierungs- und Abscheideelement (61) aufnimmt, wobei der Aufnahme- und Passkörper (60) mit einem Wassereinlass (62) und einem Wasserauslass (63), welche mit der Leitung verbunden werden können, und mit einem zusätzlichen Auslass (64) bereitgestellt ist, um die periodische Entnahme von Sediment und Schmutz zu gestatten, welche aus dem Kreis stammen.

## Revendications

1. Soupape de ventilation à flotteur pour un dispositif dégazeur pour un circuit de chauffage, comprenant :
- un corps de soupape (3) définissant une cavité (4) qui s'étend le long d'un axe longitudinal (X) ;
- un flotteur (5) logé dans ladite cavité (4) et pouvant coulisser le long dudit axe longitudinal (X) ;
- un élément formant couvercle (6) configuré pour fermer une extrémité (7) dudit corps de soupape (3) et muni d'une ouverture de libération d'air (8) qui s'étend transversalement par rapport audit axe longitudinal (X), ledit élément formant couvercle (6) incluant un bouchon (9) pour ladite ouverture de libération d'air (8) relié de manière opérationnelle audit flotteur (5),
ledit élément formant couvercle (6) et ledit corps de soupape (3) comprenant respectivement une première partie de connexion (12) et une seconde partie de connexion (13), qui définissent ensemble une articulation à pivot (14) configurée pour empêcher un mouvement axial relatif dudit élément formant couvercle (6) et dudit corps de soupape (3) parallèlement audit axe longitudinal (X) et de façon à permettre, même pendant le fonctionnement dudit circuit de chauffage, un ajustement angulaire dudit élément formant couvercle (6) autour dudit axe longitudinal (X) et par rapport audit corps de soupape (3) pour orienter ladite ouverture de libération d'air (8) d'une façon souhaitée,
ladite première partie de connexion (12) et ladite seconde partie de connexion (13) définissant ensemble un siège d'étanchéité annulaire (21) comme moyen d'étanchéité (22),
**caractérisée en ce que** ladite première partie de connexion (12) et ladite seconde partie de connexion (13) définissent en outre ensemble un siège de maintien annulaire (17) pour loger un moyen de maintien (18) approprié pour empêcher ledit mouvement axial relatif et pour permettre ledit ajustement angulaire pendant le fonctionnement de la soupape.

2. Soupape de ventilation à flotteur selon la revendication 1, dans laquelle ladite première partie de connexion (12) et ladite seconde partie de connexion (13) sont mises en forme afin d'être mutuellement coaxiales et de définir un accouplement à pivot d'étanchéité.

3. Soupape de ventilation à flotteur selon la revendication 1 ou 2, dans laquelle une partie formant siège de maintien (15) et une partie formant siège de maintien supplémentaire (16) sont respectivement obtenues de manière circonférentielle sur ladite première partie de connexion (12) et sur ladite seconde partie de connexion (13), ladite partie formant siège de maintien (15) et ladite partie formant siège de maintien supplémentaire (16) définissant ensemble ledit siège de maintien annulaire (17) mis en forme pour loger un anneau de type « Seger » (18) approprié pour empêcher un mouvement axial relatif entre ledit élément formant couvercle (6) et ledit corps de soupape (3).

4. Soupape de ventilation à flotteur selon n'importe laquelle des revendications 1 à 3, dans laquelle une partie formant siège d'étanchéité (19) et une partie formant siège d'étanchéité supplémentaire (20) sont respectivement obtenues de manière circonférentielle sur ladite première partie de connexion (12) et ladite seconde partie de connexion (13), ladite partie formant siège d'étanchéité (19) et ladite partie formant siège d'étanchéité supplémentaire (20) définissant ensemble ledit siège d'étanchéité annulaire (21) mis en forme pour loger le moyen d'étanchéité (22), tel qu'un élément formant « joint torique ».

5. Soupape de ventilation à flotteur selon n'importe laquelle des revendications 1 à 4, dans laquelle une partie en saillie annulaire (50) et une partie en saillie circulaire avec une section transversale trapézoïdale (51), ou avec une section transversale tronconique, sont respectivement obtenues sur ladite première partie de connexion (12) et sur ladite seconde partie de connexion (13), qui sont mises en forme de façon à tourner avec une rotation relative autour dudit axe longitudinal (X), ladite partie en saillie circulaire avec une section transversale trapézoïdale (51), ou avec une section transversale tronconique, étant munie d'une surface (52) conique ou inclinée, mise en forme de façon à faciliter l'insertion dudit moyen de maintien (18) dans ledit siège de maintien annulaire (17).

6. Soupape de ventilation à flotteur selon n'importe laquelle des revendications 1 à 5, dans laquelle ladite première partie de connexion (12) est configurée pour être placée de façon coaxiale à l'intérieur de ladite seconde partie de connexion (13).

7. Soupape de ventilation à flotteur selon n'importe laquelle des revendications précédentes, dans laquelle ledit flotteur (5) inclut un corps flottant (30) dont une partie allongée (31) dépasse vers ledit élément formant couvercle (6), ladite partie allongée (31) comprenant, au niveau d'une extrémité (32), un couple de parties agrandies (33), configurées en tant qu'éléments formant brides dépassant de ladite partie allongée (31) transversalement par rapport audit axe longitudinal (X), et qui sont formées de façon à définir une zone de mise en prise annulaire (34) appropriée pour loger de façon mobile une partie d'une tige (11) dudit bouchon (9).

8. Soupape de ventilation à flotteur selon la revendication 7, dans laquelle ladite zone de mise en prise (34) est mise en forme pour permettre une rotation relative de ladite tige (11) par rapport à ladite partie allongée (31) tant sur un plan passant par ledit axe longitudinal (X), que sur un plan qui est orthogonal audit axe longitudinal (X).

9. Soupape de ventilation à flotteur selon la revendication 7 ou 8, dans laquelle lesdites parties agrandies comprennent des parties en forme de disque (33) qui sont mutuellement parallèles et séparées d'une certaine distance l'une de l'autre.

10. Soupape de ventilation à flotteur selon n'importe laquelle des revendications 7 à 9, dans laquelle une ouverture traversante (40) est obtenue le long dudit corps flottant (30) et le long de ladite partie allongée (31), à travers laquelle ledit flotteur (5) est couplé de façon axiale et de manière coulissante à un élément fixe formant ergot de guidage (41) qui s'étend à partir d'une paroi inférieure (42) dudit corps de soupape (3) jusqu'à une paroi supérieure (23) dudit élément formant couvercle (6) afin d'avoir une longueur (L) plus grande qu'une extension longitudinale (E) dudit flotteur (30).

11. Soupape de ventilation à flotteur selon la revendication 10, dans laquelle une extrémité dudit élément formant ergot de guidage (41) est vissée sur ladite paroi inférieure (42), et une extrémité supplémentaire dudit élément formant ergot de guidage (41) est logée dans une partie en retrait (43) de ladite paroi supérieure (23).

12. Soupape de ventilation à flotteur selon n'importe laquelle des revendications précédentes, dans laquelle ledit corps de soupape (3) peut être relié, via un accouplement fileté (45), à un corps formant conteneur et raccord (60) approprié pour être relié à un pipeline de circuit de chauffage et mis en forme pour loger en interne un élément de filtration et de séparation (61) approprié pour filtrer l'eau circulant à l'intérieur dudit circuit et pour séparer l'air qui est produit à l'intérieur de ce dernier.

13. Dispositif dégazeur comprenant une soupape de ventilation à flotteur (1) selon la revendication 12, dans lequel ledit corps formant conteneur et raccord (60) loge ledit élément de filtration et de séparation (61), ledit corps formant conteneur et raccord (60) étant muni d'une entrée (62) et d'une sortie (63) d'eau, qui peuvent être reliées audit pipeline, et d'une sortie supplémentaire (64) pour permettre l'évacuation périodique de n'importe quel dépôt et saleté provenant dudit circuit.
